# EUROPEAN PATENT APPLICATION

(11) **EP 2 116 583 A1**
(43) Date of publication of application: **11.11.2009**
(21) Application number: 08711374.2
(22) Date of filing: 15.02.2008
(51) Int. Cl.: C09J 9/02, B32B 27/00, B32B 27/18, C09J 7/02, C09J 11/04, C09J 11/06, C09J 109/00, C09J 133/00, C09J 163/00, C09J 201/00, H01B 1/22, H01B 5/14

(54) **CONDUCTIVE ADHESIVE COMPOSITION, CONDUCTIVE ADHESIVE SHEET AND CONDUCTIVE ADHESIVE TAPE**

(30) Priority: 15.02.2007 JP 2007035421
(71) Applicant: Diatex Co., Ltd., Chiyoda-ku Tokyo 101-0035 (JP)
(72) Inventor: YOSHIOKA, Takashi, Tokyo 101-0035 (JP); WANG, Yuchang, Kurobe-shi Toyama 938-0013 (JP)
(74) Representative: Gulde Hengelhaupt Ziebig & Schneider
(86) International application number: PCT/JP2008/052544
(87) International publication number: WO 2008/099925

(57) **Abstract**

[Problem] To provide a conductive adhesive composition capable of preventing conductivity from decreasing by corrosion of metal particles even after it is used or stored at high temperatures and high humidities for a long period of time, without impairing the conductivity of the metal powder.

[Means for Solving the Problem] Provided is a conductive adhesive composition including a metal powder dispersed in an adhesive resin, the adhesive resin containing a volatile corrosion-inhibitor, wherein the volatile corrosion-inhibitor is preferably at least one member selected from the group consisting of dicyclohexylammonium cyclohexanecarboxylate, monoethanolamine benzoate, and cyclohexylamine benzoate.

## Description

### Technical Field

The present invention relates to conductive adhesive compositions, conductive adhesive sheets, and conductive adhesive tapes, and more particularly, to a conductive adhesive composition, a conductive adhesive sheet, and a conductive adhesive tape, which are capable of effectively preventing the conductive function from decreasing by corrosion of metal particles in the adhesive.

### Background Art

Conductive adhesive sheets or conductive adhesive tapes prepared by cutting such sheets into narrow widths, which exhibit both electrical conductivity and adhesiveness (stickiness), have conventionally been used in electrical wires, flexible printed circuit boards (FPCs), wire harnesses, cables, electronic components, and the like for use in the inside or movable parts of electronic equipment such as computers, digital devices, communication equipment, and the like, for the purpose of electromagnetic shielding to reduce noise, or for grounding to reduce static electricity.

Known as such conductive adhesive sheets or tapes are those obtained by applying a conductive adhesive, in which conductive particles such as a metal powder are dispersed in an adhesive, to a metal foil or a conductive substrate such as a film or a fabric with conductivity. Some of the examples are as follows.

(1) A conductive adhesive tape including a conductive material such as a metal powder or the like dispersed therein, wherein the conductive material has a longitudinal dimension of at least equal to or less than twice the thickness of an adhesive layer (patent document 1 discloses).

(2) A flame-retardant electromagnetic shielding material with a three-layer structure, including a film-like support, a conductive thin film formed on one surface of the support, and a conductive adhesive containing a conductive powder and a flame retardant formed on the thin film (patent document 2 discloses).

(3) An adhesive sheet for electromagnetic shielding, including a conductive substrate having a conductive metal layer on both surfaces, and an adhesive layer formed on at least one surface of the conductive metal layer; wherein the adhesive layer includes an adhesive material (100 parts by weight) and nickel powder (50 to 100 parts by weight); the nickel powder contains 50% by volume of particles (A) with a thickness of 50 to 80% of the thickness of the adhesive layer, and 50% by volume of particles (B) with a thickness of less than 50% of the thickness of the adhesive layer; and the ratio of (A) to (B) is from 40:60 to 80:20 (patent document 3 discloses).

Patent document 4 discloses a conductive resin composition obtained by adding a metal powder to a resin composition containing blocked isocyanates and a chelating agent, so as to remove any oxide on the surface prior to curing the resin, and allow the chelating agent to react with the blocked isocyanates after curing the resin to form a crosslinked polymer compound, thereby obtaining a stable resin composition.
Patent document 1: JP H5-222346 A
Patent document 2: JP 2003-258480 A
Patent document 3: JP 2005-277145 A
Patent document 4: JP H10-33061 A

### Disclosure of the Invention

### Problems ta be Solved by the Invention

In recent years, computers and digital devices have extensively been incorporated into various home appliances and electronic equipment, and are used under various environments. Especially when these products are used in tropical regions or hot and humid places such as bathrooms, dressing rooms, lavatory, kitchens, and the like, corrosion occurs in the metal powders dispersed in the adhesives of conductive adhesive sheets or tapes in these products after long-term use. This causes conductivity to deteriorate, resulting in lowered electromagnetic shielding performance or lowered grounding performance.

Such corrosion on the metal powder surface is considered to form by oxygen in the air gradually reaching, via micropores in the adhesive resin layer, into the surface of the metal powder dispersed inside.

In order to prevent corrosion of a metal powder, an approach of pre-treating the surface of the metal powder to provide an anti-corrosive coating has been contemplated; such a coating, however, causes the conductivity of the metal powder to deteriorate significantly.

Patent document 4 discloses forming a conductive resin composition by adding a metal powder to a resin composition containing blocked isocyanates and a chelating agent, so as to remove any oxide on the surface prior to curing the resin, using the effect of the chelating agent. However, after the resin has cured, i.e., when the product is in use, a stable resin composition has been formed by the reaction of the chelating agent with the blocked isocyanates, and hence the chelating agent does not function to prevent oxygen in the air from reaching into the surface of the metal powder via micropores in the resin layer. Therefore, corrosion on the metal powder surface due to long-term use cannot be prevented.

In view of the above, an object of the present invention is to provide a conductive adhesive composition, a conductive adhesive sheet, and a conductive adhesive tape, which are capable of preventing corrosion of a metal powder so as not to decrease conductivity even after they have been used or stored at high temperatures and high humidities for a long period of time, without impairing the conductivity of the metal powder.

Other objects of the invention will become apparent from the following description.

### Means for Solving the Problems

The above-described object is solved by the inventions set forth below.

The invention according to claim 1 is a conductive adhesive composition including a metal powder dispersed in an adhesive resin, the adhesive resin comprising a volatile corrosion-inhibitor.

The invention according to claim 2 is the conductive adhesive composition as defined in claim 1, wherein the volatile corrosion-inhibitor is at least one member selected from the group consisting of dicyclohexylammonium cyclohexanecarboxylate, monoethanolamine benzoate, and cyclohexylamine benzoate.

The invention according to claim 3 is the conductive adhesive composition as defined in claim 1 or 2, wherein the adhesive resin is an acrylic adhesive resin, a rubber-based adhesive resin, an acrylic/epoxy adhesive resin, or an epoxy/rubber adhesive resin with a weight average molecular weight of 10,000 or more.

The invention according to claim 4 is a conductive adhesive sheet comprising an adhesive layer made of the conductive adhesive composition of claim 1, 2, or 3 on one or both surfaces of a conductive substrate.

The invention according to claim 5 is a conductive adhesive tape comprising an adhesive layer made of the conductive adhesive composition of claim 1, 2, or 3 on one or both surfaces of a conductive substrate.

### Effects of the Invention

The present invention provides a conductive adhesive composition, a conductive adhesive sheet, and a conductive adhesive tape, which are capable of preventing conductivity from decreasing by corrosion of a metal powder even after they have been used or stored at high temperatures and high humidities for a long period of time, without impairing the conductivity of the metal powder.

### Brief Description of the Drawings

FIG. 1 is a cross section illustrating the structure of a conductive adhesive sheet; and
FIG. 2 is a cross section illustrating a method for manufacturing a conductive adhesive sheet.

### Explanation of Reference Numerals

1: conductive backing
2: conductive adhesive layer
3: release liner

### Best Mode for Carrying Out the Invention

Embodiments of the present invention will be described below.

The conductive adhesive composition of the invention is a conductive adhesive composition including a metal powder dispersed in an adhesive resin, wherein the adhesive resin contains a volatile corrosion-inhibitor.

The adhesive resin of the invention is preferably an acrylic adhesive resin, a rubber-based adhesive resin, an acrylic/epoxy adhesive resin, or an epoxy/rubber adhesive resin.

The acrylic adhesive resin is an adhesive that principally contains an acrylic polymer obtained by copolymerization of an alkyl (meth)acrylate monomer (a) whose alkyl group has carbon atoms of 4 to 12 as a main monomer; and a monomer (b) containing a radically polymerizable unsaturated group and at least one functional group.

Examples of the monomer (a) include methyl (meth)acrylate, ethyl (meth)acrylate, n-butyl (meth)acrylate, i-butyl (meth)acrylate, n-octyl (meth)acrylate, i-octyl (meth)acrylate, 2-ethylhexyl (meth)acrylate, i-nonyl (meth)acrylate, lauryl (meth)acrylate, and the like.

Specific examples of the monomer (b) include acrylic acid, methacrylic acid, itaconic acid, maleic acid, fumaric acid, maleic anhydride, 2-hydroxyethyl (meth)acrylate, 2-hydroxypropyl (meth)acrylate, acrylamide, methacrylamide, N,N-dimethyl (meth)acrylamide, N-methylolacrylamide, N,N-dimethylaminoethyl (meth)acrylate, N,N-diethylaminoethyl (meth)acrylate, and the like.

The rubber-based adhesive resin is an adhesive that principally contains butyl rubber, natural rubber, or a polystyrene/polyisoprene block copolymer, and also contains, as needed, a tackifier, a filler, a softener, a crosslinking agent, and an anti-aging agent.

The acrylic/epoxy adhesive resin is an adhesive that principally contains an expoxy resin (c), an epoxy-containing acrylic resin (d), and an epoxy curing agent (e).

Examples of the epoxy resin (c) include bisphenol epoxy resins such as bisphenol A epoxy resins, bisphenol F epoxy resins, and hydrogenated bisphenol A epoxy resins; novolak epoxy resins such as phenol novolak epoxy resins and cresol novolak epoxy resins; glycidyl alkyl ether epoxy resins such as neopentyl glycol polyglycidyl ether; glycidyl amine epoxy resins such as tetraglycidyl diaminodiphenylmethane and triglycidyl-p-aminophenol; glycidyl ester epoxy resins such as diglycidyl phthalate and diglycidyl hexahydrophthalate; alicyclic epoxy resins such as 3,4-epoxycyclohexylmethyl(3',4'-epoxycyclohexane)carboxylate; and the like.

The epoxy-containing acrylic resin (d) is obtained by copolymerization of an alkyl (meth)acrylate monomer and an epoxy-containing monomer. Examples of alkyl (meth)acrylate monomers include the above-mentioned examples of the monomer (a), and examples of epoxy-containing monomers include glycidyl (meth)acrylate, glycidyl (meth)allylether, glycidyl vinyl ether, and the like.

Examples of the epoxy curing agent (e) include a compound that reacts with the epoxy resin or the epoxy group of the acrylic resin, a compound that produces such a reactive group upon heating, and a compound in the molecule of the curing agent that acts as a catalyst for the ring-opening polymerization reaction of the epoxy group.

Examples of epoxy curing agents include alicyclic, aromatic or heterocyclic, primary or secondary aliphatic amines such as 4-amino-2,2,6,6-tetramethylpiperidine and diaminodiphenylsulfone; active hydrogen compound-based curing agents such as dicyandiamide and octadecane-1,18-dicarboxylic acid dihydrazide; acid anhydrides such as maleic anhydride and tetrahydro anhydrous phthalic acid; urea derivative-based curing agents such as N,N-dimethylurea and N,N'-dimethylurea; and the like.

The epoxy/rubber adhesive resin is an adhesive that principally contains an epoxy resin, an acrylonitrile-butadiene copolymer (f), and an epoxy curing agent.

Examples of epoxy resins and epoxy curing agents include the above-mentioned examples of the epoxy resin (c) and epoxy curing agent (e). Examples of the acrylonitrile-butadiene copolymer (f) include an acrylonitrile-butadiene copolymer obtained by, for example, aqueous emulsion copolymerization of monomers containing butadiene and acrylonitrile as principal components at an elevated pressure. For example, commercially available products such as Nipol 1072J, DN631, 1043, and 1042 (manufactured by Zeon Corporation); JSR N230N, N233, and N241 (manufactured by JSR Corporation); and the like can be suitably used.

These adhesive resins preferably have a weight average molecular weight of 10,000 or more, preferably 50,000 or more, and more preferably 100,000 to 1,000,000, so that, when a conductive adhesive sheet or tape is formed, the adhesive composition can be applied to a release sheet so as to form a conductive adhesive layer without cissing.

Metal powders generally used for conductive adhesives can be used as the metal powder dispersed in the adhesive resin. More specifically, copper powder, nickel powder, silver powder, and silver-coated copper power can be mentioned as examples. These metal powders can be used alone, or in a combination of two or more, depending on the purpose.

The metal powder typically have a particle size of 100 µm or less, and preferably 50 µm or less.

The amount of the metal powder used is preferably from 5 to 300 parts by weight, and more preferably from 10 to 200 parts by weight, per 100 parts by weight of the adhesive resin, in order to impart a desired conductivity.

To effectively impart a conductivity, it is desired that the metal powder is homogeneously dispersed in the adhesive resin. To improve the dispersibility of the metal powder, mixing of the adhesive resin and metal powder can be performed using a kneader for high viscosity such as a batch kneader, a vertical kneader such as a spiral mixer, a planetary mixer, a pony type mixer, or a butterfly mixer, a roll kneader such as a roll mill or a taper roll, or the like.

The volatile corrosion-inhibitor for use in the invention is a compound that functions to fill the micropores in the adhesive resin layer with the volatile corrosion-inhibitor, to thereby prevent oxygen in the air from reaching to the surface of the metal powder dispersed inside. Therefore, the present invention is different in this respect from the technique disclosed in patent document 4, which cannot prevent oxygen from reaching to the surface of the metal powder in the adhesive resin layer via micropores.

The present invention encompasses both of the case where a vapor-phase anti-corrosive layer is formed on the surface of the metal powder; and the case where an oxygen-free environment is formed around the metal powder; but the latter, an oxygen-free environment, is preferable because it can be easily formed in view of the nature of micropores.

While volatile corrosion-inhibitors usable in the invention are not particularly limited, examples thereof include dicyclohexylammonium cyclohexanecarboxylate (DICHA-CHC), monoethanolamine benzoate (MEA-BA), cyclohexylamine benzoate (CHA-BA), benzotriazole (BTA), tolyltriazole (TTA), dicyclohexylammonium nitrite (DICHAN), dicyclohexylammonium salicylate (DICHA-SA), diisopropylammonium benzoate (DIPA-BA), diisopropylammonium nitrite (DIPAN), cyclohexylamine carbamate (CHC), nitronaphthaleneammonium nitrite (NITAN), cyclohexylamine cyclohexane carboxylate (CHA-CHC), dicyclohexylammonium acrylate (DICHA-AA), cyclohexylamine acrylate (CHA-AA), and the like.

Among these examples, dicyclohexylammonium cyclohexanecarboxylate (DICHA-CHC), monoethanolamine benzoate (MEA-BA), and cyclohexylamine benzoate (CHA-BA) are particularly preferable because they are readily available, and can impart good storage stability to the resulting adhesive composition.

These volatile corrosion-inhibitors may be used alone or in a combination of two or more. The volatile corrosion-inhibitor(s) used may be liquid or solid.

To effectively achieve an anti-corrosive effect on the metal powder, the amount of the volatile corrosion-inhibitor is preferably from 0.01 to 1 parts by weight, and more preferably from 0.03 to 0.5 parts by weight, per 100 parts by weight of the adhesive resin.

The volatile corrosion-inhibitor may be preblended into the adhesive resin using a known kneader prior to addition of a metal powder, or may be blended into the adhesive resin simultaneously when a metal powder is dispersed.

The adhesive resin may additionally comprise, as needed, various additives such as pigments, dyes, anti-aging agents, antioxidants, crosslinking agents, curing agents, flame retardants, tackifying resins, liquid resins, reactive diluents, and the like.

The conductive adhesive sheet of the invention is obtained by forming a conductive adhesive layer made of the above-described conductive adhesive composition on one or both surfaces of a conductive substrate.

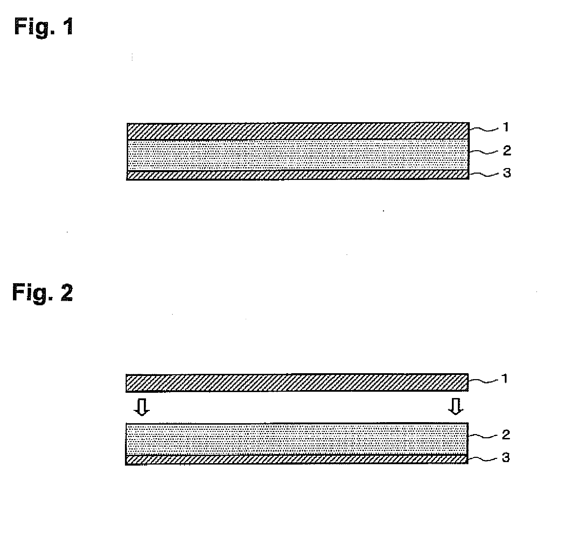

FIG. 1 is a cross section of a conductive adhesive sheet, in which the reference numeral 1 denotes a conductive backing, reference numeral 2 denotes a conductive adhesive layer, and reference numeral 3 denotes a release liner.

Backings generally used in conductive adhesive sheets are usable as the conductive substrate 1, and examples of such substrates include a substrate made of a metal foil such as copper, nickel, aluminum, iron, or the like; a substrate in which a resin film has a metal thin film such as copper, nickel, aluminum, iron, or the like formed on both surfaces; a substrate made of a metal fiber such as copper, nickel, aluminum, or the like, or made of a resin fiber having a thin film of such a metal formed on the surface; a substrate made of a conductive fabric formed using a non-woven fabric, or a conductive non-woven fabric; and the like.

The conductive substrate 1 may have a thickness of, for example, from 2 to 500 µm, as has been conventionally employed; however, when a metal foil is used as the substrate 1, the following ranges of thicknesses are preferable to prevent the substrate from being excessively stiff; that is, for example, a thickness of 100 µm or less for a copper foil, a thickness of 100 µm or less for a nickel foil, a thickness of 300 µm or less for an aluminum foil, and a thickness of 100 µm or less for an iron foil.

The conductive adhesive layer 2 is formed on one surface of the conductive substrate 1. Although not illustrated in the figure, the conductive adhesive layer 2 may also be formed on both surfaces of the conductive substrate 1 to produce a double-sided conductive adhesive sheet.

The thickness of the conductive adhesive layer 2 (the thickness after drying) is, in general, preferably from 10 to 100 µm, more preferably from 15 to 75 µm, and still more preferably from 20 to 40 µm, although it also depends on the particle size of the metal powder dispersed inside.

The release liner 3 is formed on the surface of the conductive adhesive layer 2, and removed before use. The release liner 3 is not particularly limited, and known release sheets can be used, such as, for example, papers such as kraft paper, glassine paper, high-quality papers, and nonwoven fabrics; resin films such as polyethylene, polypropylene, and polyethylene terephthalate; laminated papers of the above-mentioned papers and resin films; sheets obtained by treating the above-mentioned papers using a filler such as clay, a polyvinyl alcohol, or the like, in which one or both surfaces are subjected to a release treatment such as silicon resin treatment, long-chain alkyl treatment, fluorine treatment, or the like; etc.

As illustrated in FIG. 2, the conductive adhesive sheet can typically be produced by applying a conductive adhesive layer 2 to the release liner 3 using a roll coater, a die coater, or the like, drying the layer, and then laminating the resulting material to the conductive backing 1.

A conductive adhesive tape or a double coated conductive adhesive tape can be produced by cutting the conductive adhesive sheet or double coated conductive adhesive sheet into pieces of a narrow width.

### EXAMPLES

The present invention will be described below with reference to Examples; however, the invention is not limited by these Examples.

### (Example 1)

One-hundred parts by weight of the solids content of an acrylic copolymer (Saibinol AT-D48, manufactured by Saiden Chemical Industry Co., Ltd.) principally containing 2-ethylhexyl acrylate were blended with 1 part by weight of an isocyanate-based curing agent (M2, manufactured by Saiden Chemical Industry Co., Ltd.) as a crosslinking agent; 10 parts by weight of copper powder (FCC-115, manufactured by Fukuda Metal Foil & Powder Co., Ltd.) and 10 parts by weight of nickel powder (287, manufactured by Inco Limied); and 0.05 parts by weight of dicyclohexylammonium cyclohexanecarboxylate (DICHA-CHC). The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a conductive fabric (FCN-M-452H, manufactured by Formosa Taffeta Co., Ltd.) with a thickness of 90 µm, and the laminate was crosslinked at 23°C and 65% RH for seven days, thereby yielding a conductive adhesive sheet.

### (Example 2)

A rubber-based adhesive containing 60 parts by weight of a styrene isoprene block copolymer (Quintac 3520, manufactured by Zeon Corporation), 39.5 parts by weight of an aliphatic hydrocarbon resin (Quintone M100, manufactured by Zeon Corporation), 0.5 parts by weight of an antioxidant (Irganox B225, manufactured by Ciba Specialty Chemicals), and 100 parts by weight of toluene was blended with 10 parts by weight of copper powder (FCC-115, manufactured by Fukuda Metal Foil & Powder) and 10 parts by weight of silver powder (AgC-239, manufactured by Fukuda Metal Foil & Powder), as well as 0.05 parts by weight of dicyclohexylammonium cyclohexanecarboxylate (DICHA-CHC). The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a conductive fabric (FCN-M-452H, manufactured by Formosa Taffeta Co., Ltd.) with a thickness of 90 µm, and the laminate was aged at 23°C and 65% RH for seven days, thereby yielding a conductive adhesive sheet.

### (Example 3)

One-hundred parts by weight of the solids content of an acrylic copolymer (Saibinol AT-D48, manufactured by Saiden Chemical Industry Co., Ltd.) principally containing 2-ethylhexyl acrylate were blended with 1 part by weight of an isocyanate-based curing agent (M2, manufactured by Saiden Chemical Industry Co., Ltd.) as a crosslinking agent; 50 parts by weight of copper powder (FCC-115, manufactured by Fukuda Metal Foil & Powder Co., Ltd.) and 50 parts by weight of nickel powder (287, manufactured by Inco Limied) as conductive particles; and 0.1 parts by weight of dicyclohexylammonium cyclohexanecarboxylate (DICHA-CHC) as a volatile corrosion-inhibitor. The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a conductive fabric (FCN-M-452H, manufactured by Formosa Taffeta Co., Ltd.) with a thickness of 90 µm, and the laminate was crosslinked at 23°C and 65% RH for seven days, thereby yielding a conductive adhesive sheet.

### (Example 4)

One-hundred parts by weight of the solids content of an acrylic copolymer (Saibinol AT-D48, manufactured by Saiden Chemical Industry Co., Ltd.) principally containing 2-ethylhexyl acrylate were blended with 1 part by weight of an isocyanate-based curing agent (M2, manufactured by Saiden Chemical Industry Co., Ltd.) as a crosslinking agent; 10 parts by weight of copper powder (FCC-115, manufactured by Fukuda Metal Foil & Powder Co., Ltd.) and 10 parts by weight of nickel powder (287, manufactured by International Nickel Company); 0.1 parts by weight of dicyclohexylammonium cyclohexanecarboxylate (DICHA-CHC); and 50 parts by weight of melamine sulfate (Apinon 901, manufactured by Sanwa Chemical Co., Ltd.) and 50 parts by weight of a red phosphorus flame retardant (RINKA FQ FST100, manufactured by Rinkagaku Kogyo Co., Ltd.) as flame retardants. The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a flame-retardant conductive fabric (FCN-M452KFRD, manufactured by Formosa Taffeta Co., Ltd.) with a thickness of 90 µm, and the laminate was crosslinked at 23°C and 65% RH for seven days, thereby yielding a conductive adhesive sheet.

### (Example 5)

One-hundred parts by weight of the solids content of an acrylic/epoxy adhesive including 48 parts by weight of the solids content of an acrylic copolymer containing 80% by weight of butyl acrylate (BA), 10% by weight of glycidyl methacrylate (GMA), 10% by weight of 2-hydroxyethyl methacrylate (HO), and 100% by weight of ethyl acetate; 48 parts by weight of an epoxy resin (jER5050, manufactured by Japan Epoxy Resins Co., Ltd.); and 4 parts by weight of dicyandiamide (Dicy) as an epoxy curing agent were blended with 50 parts by weight of copper powder (FCC-115, manufactured by Fukuda Metal Foil & Powder) and 50 parts by weight of silver powder (AgC-239, manufactured by Fukuda Metal Foil & Powder); 0.1 parts by weight of dicyclohexylammonium cyclohexanecarboxylate (DICHA-CHC); and 25 parts by weight of melamine sulfate (Apinon 901, manufactured by Sanwa Chemical Co., Ltd.) and 25 parts by weight of a red phosphorus flame retardant (RINKA FQ FST100, manufactured by Rinkagaku Kogyo Co., Ltd.) as flame retardants. The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a flame-retardant conductive fabric (FCN-M-452KFRD, manufactured by Formosa Taffeta Co., Ltd.) with a thickness of 90 µm, and the laminate was aged at 23°C and 65% RH for seven days, thereby yielding a conductive adhesive sheet.

### (Example 6)

One-hundred parts by weight of the solids content of an epoxy adhesive containing 48 parts by weight of an acrylonitrile-butadiene rubber (Nipol 1072J, manufactured by Zeon Corporation), 48 parts by weight of an epoxy resin (jER828, manufactured by Japan Epoxy Resins Co., Ltd.), 4 parts by weight of dicyandiamide (Dicy) as an epoxy curing agent, and 100 parts by weight of methyl ethyl ketone as a diluent were blended with 200 parts by weight of silver powder (AgC-239, manufactured by Fukuda Metal Foil & Powder) and 0.1 parts by weight of dicyclohexylammonium cyclohexanecarboxylate (DICHA-CHC). The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a conductive fabric (FCN-M-452H, manufactured by Formosa Taffeta Co., Ltd.) with a thickness of 90 µm, and the laminate was aged at 23°C and 65% RH for seven days, thereby yielding a conductive adhesive sheet.

### (Example 7)

One-hundred parts by weight of the solids content of an acrylic copolymer (Saibinol AT-D48, manufactured by Saiden Chemical Industry Co., Ltd.) principally containing 2-ethylhexyl acrylate were blended with 1 part by weight of an isocyanate-based curing agent (M2, manufactured by Saiden Chemical Industry Co., Ltd.) as a crosslinking agent; 50 parts by weight of silver powder (AgC-239, manufactured by Fukuda Metal Foil & Powder) and 50 parts by weight of nickel powder (287, manufactured by International Nickel Company); and 0.1 parts by weight of monoethanolamine benzoate (MEA-BA). The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a flame-retardant conductive fabric (FCN-M-452H, manufactured by Formosa Taffeta Co., Ltd.) with a thickness of 90 µm, and the laminate was crosslinked at 23°C and 65% RH for seven days, thereby yielding a conductive adhesive sheet.

### (Example 8)

One-hundred parts by weight of the solids content of an acrylic copolymer (Saibinol AT-D48, manufactured by Saiden Chemical Industry Co., Ltd.) principally containing 2-ethylhexyl acrylate were blended with 1 part by weight of an isocyanate-based curing agent (M2, manufactured by Saiden Chemical Industry Co., Ltd.) as a crosslinking agent; 50 parts by weight of copper powder (FCC-115, manufactured by Fukuda Metal Foil & Powder) and 50 parts by weight of nickel powder (287, manufactured by International Nickel Company); and 0.1 parts by weight of cyclohexylamine benzoate (CHA-BA). The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a flame-retardant conductive fabric (FCN-M-452H, manufactured by Formosa Taffeta Co., Ltd.) with a thickness of 90 µm, and the laminate was crosslinked at 23°C and 65% RH for seven days, thereby yielding a conductive adhesive sheet.

### (Example 9)

One-hundred parts by weight of the solids content of an acrylic copolymer (Saibinol AT-D48, manufactured by Saiden Chemical Industry Co., Ltd.) principally containing 2-ethylhexyl acrylate were blended with 0.5 parts by weight of an isocyanate-based curing agent (AL, manufactured by Saiden Chemical Industry Co., Ltd.) as a crosslinking agent; 10 parts by weight of copper powder (FCC-115, manufactured by Fukuda Metal Foil & Powder) and 10 parts by weight of nickel powder (287, manufactured by Inco Limied); 0.1 parts by weight of dicyclohexylammonium cyclohexanecarboxylate (DICHA-CHC); and 50 parts by weight of melamine sulfate (Apinon 901, manufactured by Sanwa Chemical Co., Ltd.) and 50 parts by weight of a red phosphorus flame retardant (RINKA FQ FST100, manufactured by Rinkagaku Kogyo Co., Ltd.) as flame retardants. The mixture was then stirred and mixed sufficiently until it became homogeneous, thereby preparing a conductive adhesive composition.

The resulting conductive adhesive composition was applied to a release liner to give a coating thickness of 20 µm (based on the solids content), and dried at 100°C for 1 minute using a circulation-type dryer. The resulting material was then laminated to a flame-retardant conductive film (Metalby KN1050FB, manufactured by Komatsu Seiren Co., Ltd.) with a thickness of 20 µm, and the laminate was crosslinked at 23°C and 65% RH for seven days, thereby yielding a conductive adhesive sheet.

### (Comparative Example 1)

One-hundred parts by weight of the solids content of an acrylic copolymer (Saibinol AT-D48, manufactured by Saiden Chemical Industry Co., Ltd.) principally containing 2-ethylhexyl acrylate were blended with 1 part by weight of an isocyanate-based curing agent (M2, manufactured by Saiden Chemical Industry Co., Ltd.) as a crosslinking agent, as well as 50 parts by weight of copper powder (FCC-115, manufactured by Fukuda Metal Foil & Powder) and 50 parts by weight of nickel powder (287, manufactured by International Nickel Company). The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a conductive fabric (FCN-M-452H, manufactured by Formosa Taffeta Co., Ltd.) with a thickness of 90 µm, and the laminate was crosslinked at 23°C and 65% RH for seven days, thereby yielding a conductive adhesive sheet.

### (Comparative Example 2)

A rubber-based adhesive containing 60 parts by weight of a styrene isoprene block copolymer (Quintac 3520, manufactured by Nippon Zeon Co., Ltd.), 39.5 parts by weight of an aliphatic hydrocarbon resin (Quintone M100, manufactured by Zeon Corporation), 0.5 parts by weight of an antioxidant (Irganox B225, manufactured by Ciba Specialty Chemicals), and 100 parts by weight of toluene was blended with 10 parts by weight of copper powder (FCC-115, manufactured by Fukuda Metal Foil & Powder) and 10 parts by weight of silver powder (AgC-239, manufactured by Fukuda Metal Foil & Powder). The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a conductive fabric (FCN-M-452H, manufactured by Formosa Taffeta Co., Ltd.) with a thickness of 90 µm, and the laminate was aged at 23°C and 65% RH for seven days, thereby yielding a conductive adhesive sheet.

### (Comparative Example 3)

One-hundred parts by weight of the solids content of an epoxy adhesive containing 48 parts by weight of an acrylonitrile-butadiene rubber (Nipol 1072J, manufactured by Zeon Corporation), 48 parts by weight of an epoxy resin (jER828, manufactured by Japan Epoxy Resins Co., Ltd.), 4 parts by weight of dicyandiamide (Dicy) as an epoxy curing agent, and 100 parts by weight of methyl ethyl ketone as a diluent were blended with 200 parts by weight of copper powder (AgC-239, manufactured by Fukuda Metal Foil & Powder). The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a conductive fabric (FCN-M-452H, manufactured by Formosa Taffeta Co., Ltd.) with a thickness of 90 µm, and the laminate was aged at 23°C and 65% RH for seven days, thereby yielding a conductive adhesive sheet.

### (Comparative Example 4)

One-hundred parts by weight of the solids content of an acrylic copolymer (Saibinol AT-D48, manufactured by Saiden Chemical Industry Co., Ltd.) principally containing 2-ethylhexyl acrylate were blended with 1 part by weight of an isocyanate-based curing agent (M2, manufactured by Saiden Chemical Industry Co., Ltd.) as a crosslinking agent; 10 parts by weight of copper powder (FCC-115, manufactured by Fukuda Metal Foil & Powder) and 10 parts by weight of nickel powder (287, manufactured by Inco Limied) as conductive particles; and 0.05 parts by weight of a corrosion-inhibitor (NA-SUL, manufactured by King Industries, Inc.) principally containing dinonylnaphthalene sulfonate. The mixture was then stirred and mixed sufficiently until it became homogeneous, thereby preparing a conductive adhesive composition.

The resulting conductive adhesive composition was applied to a release liner to give a coating thickness of 30 µm (based on the solids content), and dried at 100°C for 1 minute using a circulation-type dryer. The resulting material was then laminated to a conductive fabric (FCN-M-452H, manufactured by Formosa Taffeta Co., Ltd.) with a thickness of 90 µm, and the laminate was crosslinked at 23°C and 65% RH for seven days, thereby yielding a conductive adhesive sheet.

### <Methods of Measurement and Evaluation>

Each of the conductive adhesive sheets obtained according to Examples 1 to 9 and Comparative Examples 1 to 4 was measured and evaluated for its adhesion, resistance, storage stability, and salt spray testing, in accordance with the methods of measurement and evaluation described below. The results are shown in Table 1.

### 1. Adhesion:

Adhesion was measured in accordance with JIS-Z0237. The acrylic/epoxy adhesive and epoxy adhesive were placed on a stainless plate, pressed at 110°C and 2 MPa for 5 minutes, and then cured at 160°C for 10 minutes.

### 2. Resistance:

In the same manner as the adhesion measurement, each conductive adhesive sheet was attached to 25 mm x 25 mm brass measurement terminals, with the two measurement terminals placed on the adhesive face and backside of the adhesive sheet, respectively, and then a load of 100 g was applied in the thickness direction of the adhesive sheet gasket, after which the electrical resistance between the two brass conductor pieces was measured at 23°C and 50% RH, using a milli-ohmmeter.

### 3. Storage stability at high temperatures and high humidity:

Each conductive adhesive sheet was stored in a pressure cooker at 127°C, 100% RH, and 2.5 x 10⁵ Pa for 120 hours, and then the resistance was measured as described above.

### 4. Salt spray testing:

Each conductive adhesive sheet was subjected to salt spraying for a test duration of 96 hours in accordance with JIS-Z2371, and then the resistance was measured as described above.

**[Table 1]**

| | Adhesive | | Conductive Particles | | Volatile-Corrosion Inhibitor | | Others | | Backing | Adhesion | Resistance | Storage Stability | Salt spray testing |
|---|---|---|---|---|---|---|---|---|---|---|---|---|---|
| | Type | Weight | Type | Weight | Type | Weight | Type | Weight | | [N/25 mm] | [Ω] | [Ω] | [Ω] |
| Ex 1 | AT-D48 | 100 | FCC-115 | 10 | DICHA-CHC | 0.05 | - | | FCN-M-452H | 9.0 | 0.3 | 0.3 | 0.4 |
| | | | 287 | 10 | | | | | | | | | |
| Ex. 2 | Quintac3520 | 60 | FCC-115 AGC-239 | 10 10 | 10 DICHA-CHC | 0.05 | - | | FCN-M-452H | 7.0 | 0.3 | 0.3 | 0.3 |
| | QuintoneM100 | 39.5 | | | | | | | | | | | |
| | IrganoxB225 | 0.5 | | | | | | | | | | | |
| Ex. 3 | AT-D48 | 100 | FCC-115 | 50 | DICHA-CHC | 0.1 | - | | FCN-M-452H | 6.0 | 0.1 | 0.1 | 0.1 |
| | | | 287 | 50 | | | | | | | | | |
| Ex. 4 | AT-D48 | 100 | FCC-115 | 10 | DICHA-CHC | 0.1 | Apinon901 | 50 | FCN-M-452KFRD | 7.0 | 0.3 | 0.3 | 0.3 |
| | | | 287 | 10 | | | FST100 | 50 | | | | | |
| Ex. 5 | BA/GMNHO=80/10/10 | 48 | FCC-115 AGC-239 | 50 50 | DICHA-CHC | 0.1 | Apinon901 FST100 | 25 25 | FCN-M-452KFRD | 12.0 | 0.1 | 0.1 | 0.1 |
| | jER5050 | 48 | | | | | | | | | | | |
| | Dicy | 4 | | | | | | | | | | | |
| Ex. 6 | Nipol1072J | 48 | AGC-239 | 200 | DICHA-CHC | 0.1 | - | | FCN-M-452H | 11.0 | 0.1 | 0.1 | 0.1 |
| | jER828 | 48 | | | | | | | | | | | |
| | Dicy | 4 | | | | | | | | | | | |
| Ex. 7 | AT-D48 | 100 | AGC-239 | 50 | MEA-BA | 0.1 | - | | FCN-M-452H | 5.0 | 0.1 | 0.1 | 0.1 |
| | | | 287 | 50 | | | | | | | | | |
| Ex. 8 | AT-D48 | 100 | FCC-115 | 50 | CHA-BA | 0.1 | - | | FCN-M-A52H | 5.5 | 0.1 | 0.1 | 0.2 |
| | | | 287 | 50 | | | | | | | | | |
| Ex. 9 | AT-D48 | 100 | FCC-115 | 10 | DICHA-CHC | 0.1 | Apinon901 | 50 | KN1050FB | 7.0 | 0.1 | 0.1 | 0.1 |
| | | | 287 | 10 | | | FST100 | 50 | | | | | |
| Comp. Ex. 1 | AT-D48 | 100 | FCC-115 | 50 | - | | - | | FCN-M-452H | 9.0 | 0.1 | 10 | 12 |
| | | | 287 | 10 | | | | | | | | | |
| Comp. Ex. 2 | Quintac3520 | 60 | FCC-115 AGC-239 | 10 10 | - | | - | | FCN-M-452H | 6.5 | 0.3 | 12 | 15 |
| | QuintoneM100 | 39.5 | | | | | | | | | | | |
| | IrganoxB225 | 0.5 | | | | | | | | | | | |
| Comp. Ex. 3 | Nipol1072J | 48 | AGC-239 | 200 | - | | - | | FCN-M-452H | 12.0 | 0.1 | 8 | 10 |
| | jER828 | 48 | | | | | | | | | | | |
| | Dicy | 4 | | | | | | | | | | | |
| Comp. Ex. 4 | AT-D48 | 100 | FCC-115 | 10 | - | | NA-SUL | 0.05 | FCN-M-452H | 90 | 0.3 | 10 | 15 |
| | | | 287 | 10 | | | | | | | | | |

As shown in Table 1, the conductive adhesive sheets of Comparative Examples 1 to 4 showed extremely large increases in resistance due to corrosion of their metal powders after storage at high temperatures and humidities and after salt spraying, resulting in significant decreases in conductivity. In contrast, the conductive adhesive sheets of Examples 1 to 9 containing volatile corrosion-inhibitors showed substantially no change in resistance even after storage at high temperature and humidity and after salt spraying, and were thus capable of maintaining their conductivity.

As especially seen in Comparative Example 4, the conductive adhesive sheet, which contained a corrosion-inhibitor that is not volatile, showed significant decreases in conductivity after storage at high temperatures and humidities and after salt spraying. These results confirmed the effects of the present invention obtained by blending a volatile corrosion-inhibitor.

## Claims

1. A conductive adhesive composition including a metal powder dispersed in an adhesive resin, the adhesive resin comprising a volatile corrosion-inhibitor.

2. The conductive adhesive composition according to claim 1, wherein the volatile corrosion-inhibitor is at least one member selected from the group consisting of dicyclohexylammonium cyclohexanecarboxylate, monoethanolamine benzoate, and cyclohexylamine benzoate.

3. The conductive adhesive composition according to claim 1 or 2, wherein the adhesive resin is an acrylic adhesive resin, a rubber-based adhesive resin, an acrylic/epoxy adhesive resin, or an epoxy/rubber adhesive resin with a weight average molecular weight of 10,000 or more.

4. A conductive adhesive sheet comprising an adhesive layer made of the conductive adhesive composition of claim 1, 2, or 3 on one or both surfaces of a conductive substrate.

5. A conductive adhesive tape comprising an adhesive layer made of the conductive adhesive composition of claim 1, 2, or 3 on one or both surfaces of a conductive substrate.
